# EUROPÄISCHE PATENTSCHRIFT

(11) **EP 0 603 679 B1**
(45) Veröffentlichungstag und Bekanntmachung des Hinweises auf die Patenterteilung: **15.07.1998**
(21) Anmeldenummer: 93119956.6
(22) Anmeldetag: 10.12.1993
(51) Int. Cl.: C08G 18/65, C08G 18/61, C08G 77/458, A61M 25/00

(54) **Siloxanblockcopolymer-modifizierte thermoplastische Polyurethane**
Siloxane block copolymer-modified thermoplastic polyurethanes
Polyuréthanes thermoplastiques modifiés par des copolymères séquencés de siloxane

(30) Priorität: 23.12.1992 DE 4243799
(43) Veröffentlichungstag der Anmeldung: 29.06.1994
(73) Patentinhaber: BAYER AG, 51368 Leverkusen (DE)
(72) Erfinder: Pudleiner, Heinz, Dr., D-47800 Krefeld (DE); Hugl, Herbert, Dr., D-51467 Bergisch Gladbach (DE); Dhein, Rolf, Dr., D-47800 Krefeld (DE); Müller, Hanns-Peter, Dr., D-51519 Odenthal (DE)

(56) Entgegenhaltungen:
- EP-A- 0 004 939
- EP-A- 0 068 385
- EP-A- 0 332 065
- GB-A- 2 140 438
- PATENT ABSTRACTS OF JAPAN vol. 12, no. 455 (C-548) (3302) 29. November 1988 & JP-A-63 179 916 (DAINIPPON INK & CHEM INC.)

## Beschreibung

Die Erfindung betrifft Siloxanblockcopolymer-modifizierte thermoplastische Polyurethane, ein Verfahren zu ihrer Herstellung sowie ihre Verwendung als Kathetermaterial.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

Um die einzigartigen Oberflächeneigenschaften von Polysiloxanen wie z.B. Wasserabweisung, antiadhäsive Eigenschaften, Blutverträglichkeit, verminderten Anbrieb und verminderte Härte auch in Verbindung mit TPU's zu erlangen, wurden in der Vergangenheit bereits verschiedene Wege beschritten.

Ein Weg besteht im Mischen von TPU's mit Polysiloxanen. Aufgrund der schlechten Verträglichkeit von Polysiloxanen mit synthetischen Polymeren müssen die Siloxane modifiziert werden. Eine Möglichkeit besteht im Verwenden von Siloxanen mit vinylpolymerisierbaren Doppelbindungen (JP 59/78236; 1984). Gemäß US-A 4 675 361 (= GB-A 21 40 438) verwendet man polydialkylsiloxanhaltige Polyurethane als Additive für blutverträgliche Basispolymere. Angegeben werden lediglich hydroxyalkylterminierte Siloxane als nichtpolare Weichsegmente.

Der Nachteil einer solchen Verbindung liegt in der großen Menge von Polysiloxan, die zur Verbesserung der Oberflächeneigenschaften nötig ist, und zum anderen darin, daß es sich hierbei um ein sehr aufwendiges Herstellverfahren handelt.

Eine weitere beschriebene Lösungsmöglichkeit stellt die Verwendung des weichen Polysiloxans als nichtpolares Weichsegment in einem thermoplastisch verarbeitbaren Elastomer dar (JP 60 252 617, US-A 4 518 758). Wegen des nötigen hohen Molekulargewichts der Siloxankomponenten ist auch hier ein beträchtlicher Siloxananteil erforderlich. Gleichzeitig stört dieser hohe Siloxananteil die Phasenmorphologie derart, daß die mechanischen Eigenschaften abfallen.

EP-A-68 385 beschreibt Polyurethan enthaltende Elastomere, die Ethersegmente enthaltendes Hydroxyalkylpolyalkylsiloxan in der Hauptkette aufweisen.

Aus der US-A 35 62 352 sind bereits polysiloxanhaltige Blockcopolymere bekannt, bei denen Polysiloxanblöcke und Polyurethanblöcke direkt über Si-N-Bindungen miteinander verbunden sind. Es handelt sich hierbei aber nicht um thermoplastische Polyurethane.

Weiterhin sind aus US 4 647 643 nicht blockende, weiche Polyurethane bekannt, die 1 bis 15 Gew.-% Polyoxyalkylen-Siloxan-Blockcopolymere enthalten. Diese Materialien werden auch als nicht klebend und nicht giftig beschrieben und können für medizinische Geräte wie Schäuche, Blutbeutel und Implantate, genutzt werden.

Bei TPU, die aus linearen Polyhydroxyverbindungen, Diisocyanaten und Diolen aufgebaut sind, wird die Härte über den Gehalt an sogenannter Hartphase, die im wesentlichen aus Diisocyanat und kurzkettigen Diolen gebildet wird, eingestellt. In der Praxis jedoch ist die Herstellung von TPU's mit geringerer Härte erschwert aufgrund von Verklebungen im Aggregat und schwerer Entformbarkeit. Die erreichbaren verminderten Härten führen in der Regel zu einer Herabsetzung der mechanischen Eigenschaften bei gleichzeitig erhöhtem Druckverformungsrest.

Besonders nachteilig wirkt sich bei weich eingestellten thermoplastischen Polyurethanen der Einbau von Diisocyanaten aus, die aus verschieden geometrischen Isomeren bestehen, z.B. 4,4'-Bis-(isocyanatcyclohexyl)-methan. Man erhält damit nur TPU, die aus sehr langsam rekristallisierenden Hartsegmenten aufgebaut sind und daher schlecht entformbare Produkte liefern.

Die bedeutensten, in der Medizintechnik eingesetzten thermoplastischen Polyurethane sind aromatische TPU, bei denen zumindest der Verdacht besteht, daß bei nicht optimaler Verarbeitung und bei Langzeitanwendungen über 30 Tage hinaus, 4,4'-Bis-(aminophenyl)-methan (MDA) gebildet wird. Zwar gibt es auch cycloaliphatische TPU's, die nicht dieses Problem haben, sie bereiten jedoch aufgrund der schlecht rekristallisierenden Hartsegmente Schwierigkeiten bei der Verarbeitung. Die in Tab. 2 gzeigten Oberflächenklebrigswerte wurden im Vergleich zu cycloaliphatischen TPU des Standes der Technik gemessen.

Darüber hinaus sind thermoplastische Polyurethane ideal für den biomedizinischen Gebrauch geeignet, besonders für Katheter. Da Katheter in den Körper eingeführt werden, sollte der ideale Katheter bei Raumtemperatur zunächst einen hohen Biegemodul, Schubmodul oder hohe Steifigkeit besitzen.

Dies gilt besonders für intravenöse Katheter, die durch die Haut direkt in die Blutbahn eingeführt werden. Da die Leichtigkeit des Einführens besonders wichtig beim Platzieren des Katheters ist, werden intravenöse Katheter aus Materialien mit hohem Modul wie Polytetrafluorethylen, Poly(chlortrifluorethylen), fluoriertem Ethylen-Propylen-Copolymer oder ähnlichem hergestellt. Wenn der Katheter jedoch in die Vene am richtigen Ort platziert ist, ist die Steifigkeit oder das hohe Modulniveau von Nachteil. Die Steifigkeit kann zu einer Verletzung der Innenwand der Blutgefäße durch die Katheterspitze führen.

Ein sehr weiches, gummi-ähnliches Material würde viel weniger die Gefahr beeinhalten, daß die Innenseite von Blutgefäßen verletzt werden kann. Damit verbunden wäre eine verlängerte Liegezeit des Katheters, ohne daß er ersetzt oder an einer anderen Stelle neu gesetzt werden müßte. Ein flexibler Katheter mit den vorgenannten Vorteilen wäre jedoch nicht so leicht in den Körper einführbar. Daher besteht ein Bedarf nach einem Katheter, der leicht in die Blutbahn einführbar und plazierbar ist, aber die Blutbahninnenwand nicht verletzt.

Die ideale Katheterzusammensetzung hat bei Raumtemperatur während der Einführ- und Plazierphase des Katheters einen hohen Modul oder Steifigkeit und erweicht in der Blutbahn bei Körpertemperatur. Dieser Prozeß der Vorerweichung sollte möglichst schnell vonstatten gehen, damit die geschilderte Verletzungsgefahr innerhalb der Blutbahn möglichst minimal gehalten werden kann. Die Erweichung des Katheters darf jedoch nicht soweit fortschreiten, daß das verwendete Material seine mechanische Festigkeit größtenteils einbüßt. Beim Entfernen des Katheters bestünde sonst die Gefahr, daß bei Materialbruch Teile des Katheters in der Blutbahn verbleiben würden.

Zur Erzielung der Vorerweichung bei Körpertemperatur wurden schon verschiedene Wege beschritten.

Aus US-P 3 822 238 sind Wasser aufnehmende Polyurethane bekannt. Sie werden aus Polymeren mit niedrigem Kohlenstoff zu Sauerstoff zu Stickstoff-Verhältnis oder quartären Ammonium oder salzhaltigen Gruppen enthaltende Polymerketten und kleinen Mengen Isocyanat hergestellt.

Es wird vorgeschlagen, daß diese Polymere als Beschichtungen oder Membranen gebraucht werden können oder durch Gießen zu Körperimplantaten geformt werden können. Von den vielen beanspruchten Polymeren wird keines vorgeschlagen, daß für medizinische Implantate besonders brauchbar wäre. Darüberhinaus werden keine Angaben zu den Eigenschaften gemacht, die Polymere für Implantate haben sollten.

Aus US-P 3 975 350 ist bekannt, daß hydrophile, vernetzte Polyurethansysteme nützlich als Träger für drugrelease als Beschichtung oder für Implantate wie Katheter und Kanülen sein kann. Wiederum findet man keine Aussagen, welche Polyurethansysteme für Implantate nützlich wären.

Aus US-P 4 454 309 ist eine Polymermischung bekannt, die aus einem hydrophilen Polyurethan und einem Polyolefin aus der Gruppe der Polyalkylester und Polyacrylsäureester stammt. Diese Mischung soll für eine Reihe von Anwendungen brauchbar sein, einschließlich Katheter und Kanülen.

Aus PCT WO 86/01813 sind mehrphasige Polymermischungen bekannt, die aus einem nicht-hydrophilen Polymer wie z.B. Polyurethn und einer hydrophilen Polymerkomponente bestehen. Als Vorteile dieser Mischungen werden die Erweichung und das Quellen der Polymermischung durch Absorption von Wasser beschrieben. Bei vollständiger Hydratisierung, gemessen nach 24 h, wird ein Erweichungsverhältnis von 2:1 erreicht.

Aus EP 422 693 sind Polymerblends, bevorzugt bestehend aus Phenoxy-Harz als Weichmacher und Polyesterurethane, mit ausgewählten Erweichungstemperaturen zwischen Raumtemperatur und 62°C bekannt. Diese Mischungen werden als Materialien für medizinische Artikel vorgeschlagen.

Die beschriebenen Systeme besitzen einige Nachteile. So lassen sich die meisten Polymere nicht mit üblichen Verfahren zu Kathetern formen, da es sich nicht um thermoplastische Kunststoffe handelt. Der wesentliche Nachteil ist jedoch, daß die Erweichung der Materialien durch Absorption von Wasser erfolgt.

Dieser Prozeß wird durch Diffusion kontrolliert und braucht dadurch erheblich länger als die Erweichung durch Temperaturerhöhung. Somit erscheint eine Erweichung aufgrund der Erhöhung von Raumtemperatur auf Körpertemperatur vorteilhafter. Darüberhinaus mangelt es mehrphasigen Systemen in der Regel an optischer Transparenz.

In keiner dieser Anmeldungen sind über die bekannten Polyurethanoberflächen modifizierten Eigenschaften von Siloxankomponenten hinaus auf die in der vorliegenden Erfindung beanspruchten Polyurethane mit den überraschend gefundenen Eigenschaften der Erweichung im Bereich der Körpertemperatur beschrieben. Darüberhinaus eignen sich die Verfahren nicht zur Herstellung von Kathetern nach an sich üblichen thermoplastischen Verarbeitungsverfahren. Der Einbau von Polysiloxanen zielt gerade bei weichen Kunststoffen mit Härte-Einstellungen unterhalb von 100 Shore A auf die Antiblocking-Eigenschaften nach Extrusions- oder Spritzgruß-Verarbeitung. Nach der Lehre der US-P 46 47 643 war nicht zu erwarten, daß Siloxanblockcopolymere auch darüberhinaus geeignet sein könnten, die gestellte Aufgabe zu erfüllen.

Es bestand daher weiterhin die Aufgabe, auf wirtschaftlichem Wege die guten mechanischen Eigenschaften eines TPU's mit den besonderen Eigenschaften eines Polysiloxans zu verbinden, um thermoplastisch verarbeitbare Produkte zu erhalten, die aber besser verarbeitbar sind als die cycloaliphatischen TPU des Standes der Technik und dazu im Bereich der Körpertemperatur erweichen.

Gegenstand der Erfindung sind thermoplastische Polyurethane auf Basis von
a) wenigstens einem im wesentlichen linearen hydroxylterminierten Polyol, bevorzugt einem Polyether, -carbonat oder einem Gemisch aus diesen, vorzugsweise mit einem mittleren Molekulargewicht von 800 bis 8.000, vorzugsweise 1.000 bis 4.000,
b) wenigstens einem Isocyanat der allgemeinen Formel OCN-Z-NCO, wobei Z ein zweiwertiges organisches Radikal ist,
c) gegebenenfalls wenigstens einem Diol-Kettenverlängerer, vorzugsweise einem aliphatischen Diol mit 2 bis 14 C-Atomen, bevorzugt Ethylenglykol, Butandiol, Hexandiol, 1,4-Di-(b-hydroxyethyl)-hydrochinon,
d) wenigstens einem im wesentlichen, linearen hydroxylterminierten Polyol der Formel 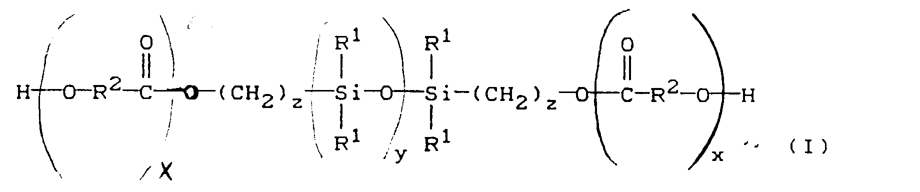 in welcher x einen Wert von 1 bis 30 hat, y den Wert von 1 bis 50, bevorzugt 20 bis 40 und besonders bevorzugt 25 bis 35, z den Wert 2 bis 4, in welcher der Rest R¹ eine Alkyl-Gruppe mit 1 bis 6 C-Atomen oder eine Phenyl-Gruppe ist und R² eine Alkylen-Gruppe mit 2 bis 8 C-Atomen ist.

TPU können kontinuierlich oder diskontinuierlich hergestellt werden. Als die bekanntesten Herstellungsverfahren werden das sogenannte Bandverfahren und das Extruderverfahren auch technisch genutzt.

Gegenstand der Erfindung ist weiterhin ein Verfahren zur Herstellung der erfindungsgemäßen thermoplastischen Polyurethanelastomeren wobei man die Aufbaukomponenten a) bis d), gegebenenfalls in Gegenwart von Katalysatoren, Hilfsmittel und/oder Zusatzstoffen zur Reaktion bringt und wobei das NCO/OH-Verhältnis der verwendeten Basiskomponenten zwischen 0,85 und 1,2, vorzugsweise zwischen 0,95 und 1,1 liegt.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus Propylenoxid-1,2 und Ethlyenoxid. Die Alkylenoxide können einzeln, alternierend nacheinander oder als Mischungen verwendet werden. Als Startermoleküle kommen beispielsweise in Betracht: Wasser Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Bevorzugte Polyetherole sind ferner die hydroxylgruppenhaltigen Polymerisationsprodukte des Tetrahydrofurans.

Die im wesentlichen linearen Polyetherole besitzen vorzugsweise Molekulargewicht von 800 bis 8.000, vorzugsweise 1.000 bis 4.000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle von Dicarbonsäuren die entsprechenden Dicarbonsäurederivate wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, Ethylenglykol, Diethylenglykol, Butandiol-1,4, Pentandiol-1,5, Hexandiol-1,6, Decandiol-1,10, 2,2-Dimethylpropandiol-1,3, -1,3, Propandiol-1,3 und Dipropylenglykol. Je nach den gewünschten Eigenschaften können die mehrwertigen Alkohole allein oder gegebenenfalls in Mischung untereinander verwendet werden.

Bevorzugt sind ferner Ester der Kohlensäure mit den genannten Diolen, insbesondere solche mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycarbonsäure und vorzugsweise Polymerisationsprodukte von Lactonen, beispielsweise gegebenenfalls substituierten ω-Caprolactonen.

Als Polyesterole besonders bevorzugt verwendet werden 1,4-Butandiol-polyadipate, 1,6-Hexandiol-neopentylglykol-polyadipate, 1,6-Hexandiol-1,4-butandiol-polyadipate, Polycaprolactone und Hexandiolpolycarbonat.

Die Polyesterole besitzen Molekulargewichte von 800 bis 8,000, vorzugsweise von 1.000 bis 4.000. Als organische Diisocyanate b) kommen beispielsweise aliphatische, und vorzugsweise Diisocyanate in Betracht. Im einzelnen seien beispielhaft genannt: aliphatische Diisocyanate, wie Hexamethylen-diisocyanat und vorzugsweise cycloaliphatische Diisocyanate, wie Isophoron-diisocyanat, 1,4-Cyclohexan-diisocyanat, 1-Methyl-2,4-und -2,6-cyclohexan-diisocyanat, sowie die entsprechenden Isomerengemische 4,4'-, 2,4'- und 2,2'-Dicyclohexylmethan-diisocyanat sowie die entsprechenden Isomerengemische.

Als Kettenverlängerungsmittel c) mit Molekulargewichten von 60 bis 300 kommen vorzugsweise aliphatische Diole mit 2 bis 14 Kohlenstoffatomen, wie z.B. Ethandiol, Hexandiol-1,6, Dimethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)hydrochinon, (cyclo)aliphatische Diamine, wie z.B. Isophoron-diamin, Ethylendiamin, 1,2-, 1,3-Propylendiamin, N-Methylpropylendiamin-1,3, N,N'-Dimethylethylendiamin und aromatische Diamine, wie z.B. 2,4- und 2,6-Toluylendiamin, 3,5-Diethyl-2,4- und/oder -2,6-toluylen-diamin und primäre ortho-di-, tri-und/oder tetraalkylsubstituierte 4,4'-Diaminodiphenylmethane. Besonders bevorzugt wird Butandiol-1,4.

Zur Einstellung von Härte und Schmelzpunkt der TPU können die Aufbaukomponenten a), d) und c) in relativ breiten molaren Verhältnissen variiert werden. Bewährt haben sich molare Verhältnisse von Polyhydroxylverbindungen a) und d) zu Kettenverlängerungsmitteln c) von 1:1 bis 1:12, insbesondere von 1:1,8 bis 1:4,4, wobei die Härte und der Schmelzpunkt der TPU mit zunehmendem Gehalt an Diolen ansteigt. Hierdurch ergeben sich Produkte mit Härten im Bereich von 70 Shore A bis 75 Shore D, insbesondere von 70 Shore A bis 55 Shore D.

Zur Herstellung der TPU können die Aufbaukomponenten a) bis d), gegebenenfalls in Gegenwart von Katalysatoren, Hilfsmitteln und/oder Zusatzstoffen in solchen Mengen zur Reaktion gebracht weren, daß das Äquivalentverhältnis von NCO-Gruppen der Diisocyanate zur Summe der NCO-reaktiven Gruppen, insbesondere der OH-Gruppen der Komponenten a), c) und d) 1:0,85 bis 1,20, vorzugsweise 1:0,95 bis 1:1,1 beträgt.

In einer bevorzugten Ausführungsform sind enthalten
26 bis 87 Gew.-% Polyol a)
10 bis 52 Gew.-% Isocyanat b)
2 bis 32 Gew.-% Diol c)
1 bis 20 Gew.-% Siloxan d).

Geeignete Katalysatoren, welche insbesondere die Reaktion zwischen den NCO-Gruppen der Diisocyanate a) und den Hydroxylgruppen der Aufbaukomponenten b) und c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)ethanol, Diazabicyclo-(2,2,2)-octan und ähnliche sowie insbesondere organische Metallverbindngen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxylverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Polysiloxan-polylacton-Blockcopolymere der Formel I sind bekannte Produkte und können nach an sich bekannten Synthesemethoden hergestellt werden.

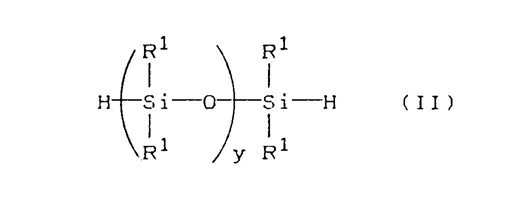

Ein Silan der Formel II wird im Verhältnis 1:2 mit einem ungesättigten, aliphatischen oder cycloaliphatischen Alkohol wie z.B. Allylalkohol, Buten-(1)-ol oder Penten-(1)-ol in Gegenwart eines Katalysators wie z.B. Hexachloroplatinsäure umgesetzt. An das bifunktionelle, hydroxyterminierte Polydimethylsiloxan können unter Zinnoctoat-Katalyse verschiedene Mengen an Caprolacton, γ-Butyrolacton oder ε-Valerolacton oder deren Gemische addiert werden, wobei das Gewichtsverhältnis von Siloxan zu Lacton die Lactonblocklänge bestimmt.

Von der Firma Goldschmidt (Essen) sind solche Produkte unter den Bezeichnungen Tegomer® 6110, 6120, 6140 und 6160 erhältlich.

Durch eine kovalente Verknüpfung erhält man einen festen Einbau und sogar bei hohen Siloxan-Blockcopolymer-Konzentrationen von bis zu 20 Gew.-% ein TPU mit weitgehend gleichbleibenden guten mechanischen Eigenschaften, wie Reißfestigkeit, Dehnung, Zugverformungsrest und mit den besonderen Eigenschaften von Polysiloxanverbindungen.

Darüber hinaus verbessert der Blockaufbau die Kompatibilität mit den anderen TPU-Bausteinen bei der Synthese und erleichtert den Einbau.

In der Tab. 2 ist die zeitliche Abnahme der Oberflächenklebrigkeit von den in den Beispielen hergestellten TPU im Vergleich zu einem Handelsprodukt auf Basis cycloaliphatischer TPU's.

Wie man leicht erkennen kann, nimmt die Oberflächenklebrigkeit der Schmelze bei den erfindungsgemäßen TPU nach ca. 1,5 min praktisch schon den Endwert an. Dagegen blieben die nicht erfindungsgemäßen TPU ohne Siloxan bis zu ca. 6 min klebrig, die mit Standard-Siloxan (Vergleichsbeispiel) ereichen ausgehend von einem niedrigen Niveau erst nach 3,5 min den Endwert.

Dieses z.B. auch in Mischungen mit anderen Thermoplasten und Elastomeren im Spritzguß, bei der Extrusion, im Beschichtungsverfahren und bei der Faserherstellung thermoplastisch verarbeitbare Polyurethan kann im medizinischen Sektor aufgrund seiner Oberflächeneigenschaften (Blutverträglichkeit) eingesetzt werden. Besonders geeignet ist das Material für Katheter.

Der Gegenstand der Erfindung soll anhand der folgenden Beispiele und Tabellen näher erläutert werden.

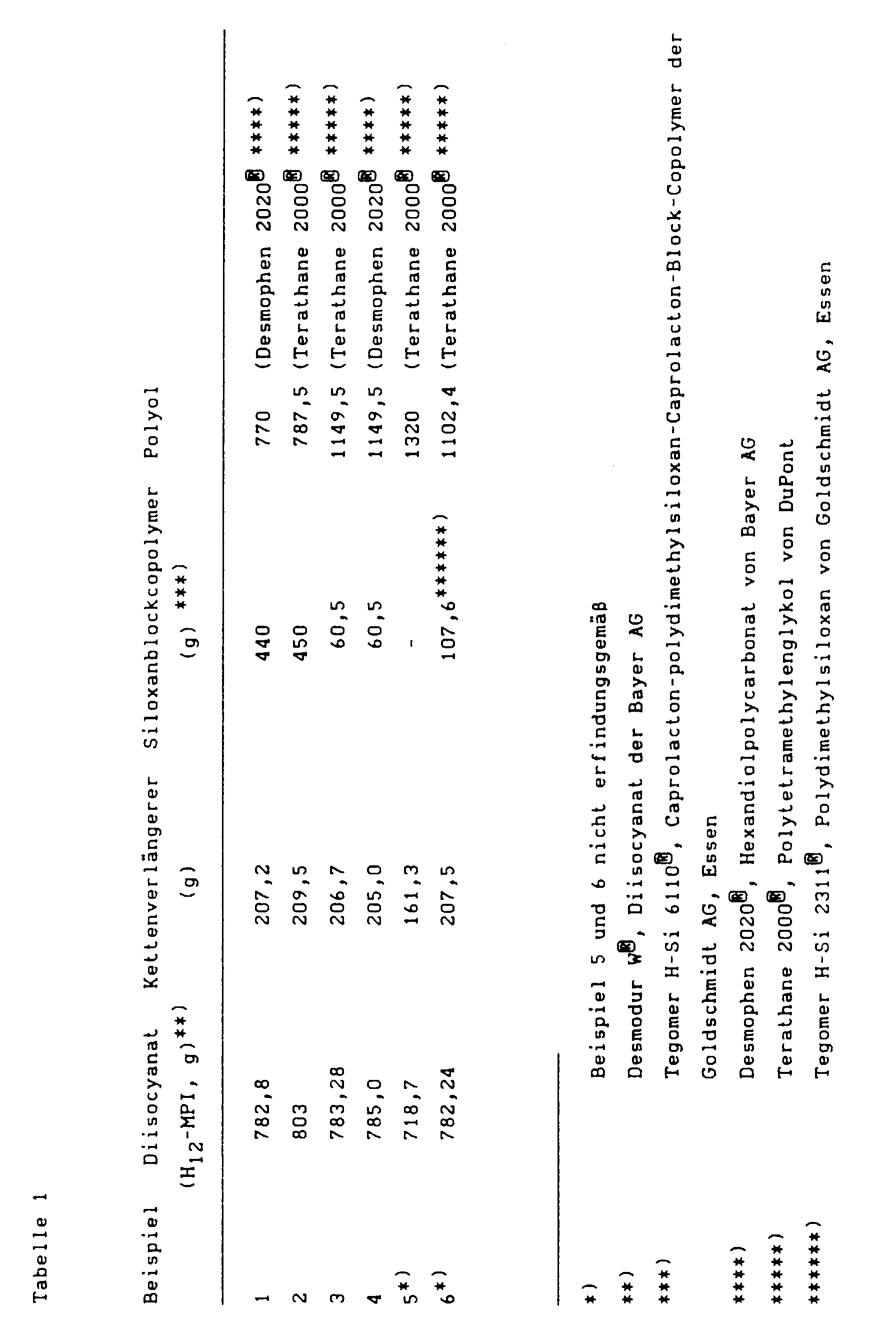

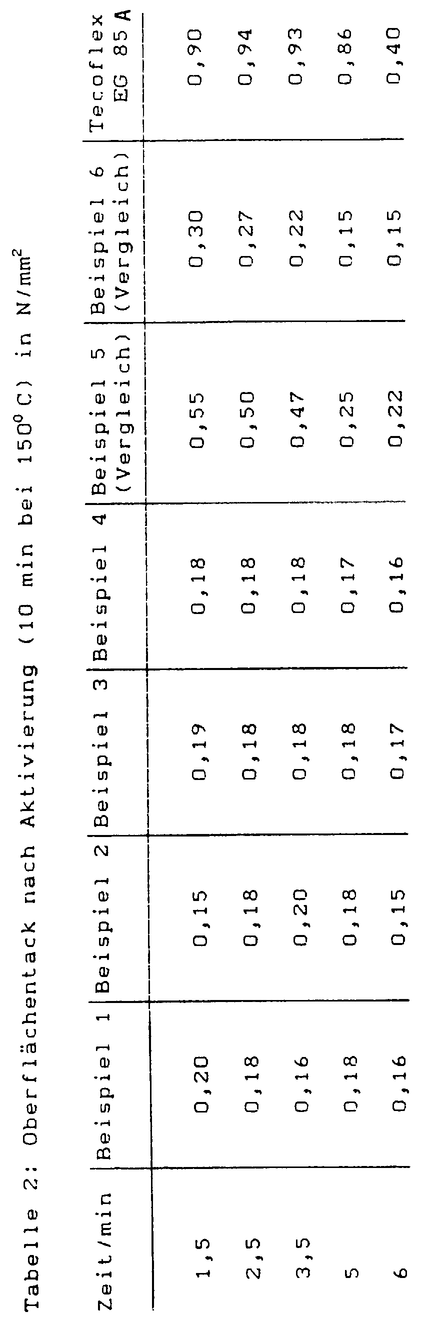

### Beispiel 1 (Semiprepolymerverfahren)

In einem 2 l-Planschliffkolben mit Rührer und Rückflußkühler werden 770 g Hexandiol-polycarbonat (OHZ = 53,8; F = 2) und 440 g Poly-ε-Caprolacton-Polydimethylsiloxan-Blockcopolymer (Tegomer 6110®) (OHZ = 56,1; F = 2) vorgelegt und bei 120°C 1 Stunde bei 14 mbar entwässert. Dann gibt man 0,11 g Dibutylzinndilaurat und 782,8 g handelsübliches 4,4'-Diisocyanatodicyclohexylmethan mit einem Anteil des trans,trans-Isomeren von ca. 20 Gew.-% zu und rührt bei 120°C. Nach 3 Stunden ist ein NCO-Wert von 9,72 Gew.-% erreicht. Man löst 8,8 g Ethylenbisstearylamid und 11,0 g 2,6-Di-tert.-butyl-kresol (Ionol) und gibt 207,2 1,4-Butandiol zu.

Nach Homogenisierung gießt man auf Teflonpfannen und tempert 12 Stunden bei 100°C. Die Platte wird zerkleinert, durch Extrusion homogenisiert und durch Spritzgruß zu Probenkörner geformt.

Das Produkt hat folgende Eigenschaften:

| | |
|---|---|
| Härte (Shore A) | 92 |
| Spannung 100 % | 10,5 [Nmm⁻²] |
| Spannung 300 % | 28 [Nmm⁻²] |
| Bruchspannung | 48,5 [Nmm⁻²] |
| Bruchdehnung | 395 % |

Vorerweichung bei 22°C

### Beispiel 2

Nach der Verfahrensweise von Beispiel 1 wird ein Gemisch aus 787,5 g Polytetramethylenglykol (Terathane 2000®) (OHZ = 56,1, F = 2), 450 g Poly-ε-caprolacton-polydimethylsiloxan-Blockcopolymer (Tegomer 6110®) (OHZ = 56,1, F = 2) entwässert und mit 0,11 g Dibutylzinndilaurat und 803 g 4,4'-Diisocyanato-dicyclohexylmethan auf einem NCO-Gehalt von 9,74 Gew.-% prepolymerisiert. 9 g Ethylenbisstearylamid, 11,25 g 2,6-Di-tert.-butylkresol und 0,11 g Dibutylzinndilaurat werden gelöst und das Prepolymer mit 209,5 g 1,4-Butandiol kettenverlängert. Nach Verarbeitung zu Probekörpern wurden folgende Eigenschaften gefunden:

Eigenschaften:

| | |
|---|---|
| Härte (Shore A) | 86 |
| Spannung 100 % | 8,9 [Nmm⁻²] |
| Spannung 300 % | 16,2 [Nmm⁻²] |
| Bruchspannung | 43,3 [Nmm⁻²] |
| Bruchdehnung | 510 % |

Vorerweichung bei 33,5°C

### Beispiel 3

Ein Gemisch aus 1149,5 g Polytetramethylenglykol 2000 (Terathane 2000®) (OHZ = 56,1; F = 2) und 60,5 g Poly-ε-caprolacton-polydimethylsiloxan-Blockcopolymer (Tegomer 6110®) (OHZ = 56,1, F = 2) wird entwässert und mit 0,11 g Dibutylzinndilaurat und 783,28 g 4,4'-Diisocyanato-dicyclohexylmethan bis zu einem NW-Gehalt von 10,03 Gew.-% bei 120°C prepolymerisiert. Nach Zugabe von 11 g 2,6-Di-tert.-butyl-kresol, 0,11 g Dibutylzinndilaurat und 8,8 g Ethylenbisstearylamid wurde mit 206,7 g 1,4-Butandiol kettenverlängert.

Eigenschaften:

| | |
|---|---|
| Härte (Shore A) | 86 |
| Spannung 100 % | 8,9 [Nmm⁻²] |
| Spannung 300 % | 16,2 [Nmm⁻²] |
| Bruchspannung | 43,3 [Nmm⁻²] |
| Bruchdehnung | 510 % |

Vorerweichung bei 28°C

### Beispiel 4

In einem 2 l-Planschliffkolben mit Ankerrührer und Rückflußkühler wird ein Gemisch aus 1149,5 g Hexandiolpolycarbonat (Desmophen 2020®) (OHZ = 53,8; F = 2) und 60,5 g Poly-ε-Caprolacton-Polydimethylsiloxan-Blockcopolymer (Tegomer 6110®) (OHZ = 56,1; F = 2) 1 Stunde bei 120°C und 14 mbar entwässert. Man gibt 785 g 4,4'-Diisocyanato-dicyclohexylmethan (trans,trans-Anteil; ca. 20 Gew.-%) und 0,11 g Dibutylzinndilaurat zu und prepolymerisiert bei 120°C. 11 g 2,6-Di-tert.-butyl-kresol, 8,8 Ethylenbisstearylamid und 0,11 g Dibutylzinndilaurat werden gelöst und das Prepolymer mit 205,0 g 1,4-Butandiol kettenverlängert.

Eigenschaften:

| | |
|---|---|
| Härte (Shore A) | 91 |
| Spannung 100 % | 11,6 [Nmm⁻²] |
| Spannung 300 % | 39,1 [Nmm⁻²] |
| Bruchspannung | 56,9 [Nmm⁻²] |
| Bruchdehnung | 355 % |

Vorerweichung bei 19° C

### Beispiel 5 (Vergleichsbeispiel; ohne Tegomer 6110® nicht erfindungsgemäß)

Wie im Beispiel 1 werden 1320 g Polytetramethylenglykol 2000 (Terathane 2000®) (OHZ = 50,1; F = 2) entwässert und mit 718,7 g 4,4'-Diisocyanato-dicyclohexylmethan und 0,11 g Dibutylzinndilaurat auf einen NCO-Gehalt von 8,5 Gew.-% polymerisiert. Nach Zugabe von 0,11 g Dibutylzinndilaurat, 3,74 g Ethylenbisstearylamid und 22 g 2,6-di-tert.-butyl-kresol wurde mit 161,3 g 1,4-Butandiol kettenverlängert. Nach Verarbeitung zu Probekörpern hatte das Material folgende Eigenschaften:

| | |
|---|---|
| Härte (Shore A) | 80 |
| Spannung 100 % | 6,2 [Nmm⁻²] |
| Spannung 300 % | 11,3 [Nmm⁻²] |
| Bruchspannung | 36,7 [Nmm⁻²] |
| Bruchdehnung | 585 % |

Vorerweichung: keine

### Beispiel 6 (Vergleichsbeispiel nicht erfindungsgemäß)

Ein Gemisch aus 1102,4 g Polytetramethylenglykol 2000 (Terathane 2000®) (OHZ = 56,1; F = 2) und 107,6 g Polydimethylsiloxan 2000 (Tegomer 2311®) (OHZ = 46, F = 2) wurde 1 Stunde bei 120°C entwässert und mit 782,24 g 4,4'-Diisocyanato-dicyclohexylmethan und 0,11 g Dibutylzinndilaurat, auf einen NCO-Gehalt von 10,08 Gew.-% prepolymerisiert.

Nach Zugabe von 11 g 2,6-tert.-Butyl-kresol, 0,11 g Dibutylzinndilaurat und 8,8 g Ethylenbisstearylamid wurde mit 207,5 g 1,4-Butandiol kettenverlängert. Nach Temperung und Verarbeitung hatte das Material folgende Eigenschaften:

| | |
|---|---|
| Härte (Shore A) | 88 |
| Spannung 100 % | 8,9 [Nmm⁻²] |
| Spannung 300 % | 14,7 [Nmm⁻²] |
| Bruchspannung | 38,6 [Nmm⁻²] |
| Bruchdehnung | 563 % |

Vorerweichung: keine

## Patentansprüche

1. Segmentierte Siloxanblockcopolymer-modifizierte thermoplastische Polyurethane auf Basis höhermolekularer Dihydroxyverbindungen, Diisocyanate und Diol-Kettenverlängerer und/oder Diamin, dadurch gekennzeichnet, daß sie
a) eine höhermolekulare Dihydroxyverbindung mit Molgewichten von 800 bis 8000,
b) wenigstens einem Isocyanat der allgemeinen Formel OCN-Z-NCO, wobei Z ein zweiwertiges organisches Radikal ist,
c) wenigstens einem difunktionellen Kettenverlängerer,
d) wenigstens einem im wesentlichen, linearen hydroxylterminierten Polyol der Formel 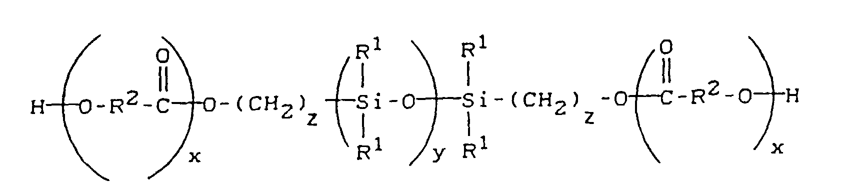 in welcher x einen Wert von 1 bis 30 hat, y den Wert von 1 bis 50, z den Wert 2 bis 4, in welcher der Rest R¹ eine Alkyl-Gruppe mit 1 bis 6 C-Atomen oder eine Phenyl-Gruppe ist und R² eine Alkylen-Gruppe mit 2 bis 8 C-Atomen ist,
bestehen.

2. Thermoplastische Polyurethane nach Anspruch 1, dadurch gekennzeichnet, daß das hydroxyterminierte Polyol d) in einer Menge von 1 bis 20 Gew.-%, bezogen auf Gesamtmenge, vorliegt.

3. Thermoplastische Polyurethane nach Anspruch 1 oder 2, dadurch gekennzeichnet, daß als niedermolekulare Dihydroxyverbindung c) Butandiol oder Hexandiol in einer Menge bis zu 70 Mol-% bezogen auf Gesamtkettenverlängerer vorliegt.

4. Verfahren zur Herstellung der modifizierten TPU's gemäß Anspruch 1 bis 3, dadurch gekennzeichnet, daß man die Ausgangskomponenten a) bis d), gegebenenfalls in Gegenwart von an sich bekannten Katalysatoren, Hilfsmitteln und/oder Zusatzstoffen stufenweise oder in einem "one-shot"-Verfahren zur Reaktion bringt, wobei das NCO/OH-Verhältnis der Basiskomponenten zwischen 0,85 bis 1,2 liegt.

5. Verwendung der modifizierten TPU's gemäß Anspruch 1 bis 3 in der Medizintechnik.

6. Medizintechnische Produkte bestehend im wesentlichen aus einem TPU gemäß einem der Ansprüche 1 bis 3.

7. Modifizierte TPU gemäß Anspruch 1, bei denen als Kettenverlängerer aliphatisches Diol mit 2 bis 14 C-Atomen und/oder cycloaliphatisches Diamin verwendet werden.

## Claims

1. Segmented thermoplastic polyurethanes modified with siloxane block copolymers and based on high molecular weight dihydroxycompounds, diisocyanates and diol chain extenders and/or diamine, characterised in that they consist of
a) a high molecular weight dihydroxy compound with a molecular weight of 800 to 8000,
b) at least one isocyanate of the general formula OCN-Z-NCO, wherein Z is a divalent organic radical,
c) at least one difunctional chain extender,
d) at least one substantially linear hydroxyl-terminated polyol of the formula 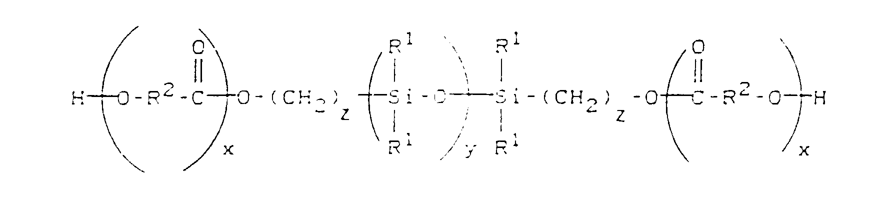 in which x has a value from 1 to 30, y has a value from 1 to 50, z has the value 2 to 4, in which the group R¹ is an alkyl group with 1 to 6 carbon atoms or a phenyl group and R² is an alkylene group with 2 to 8 carbon atoms.

2. Thermoplastic polyurethanes according to Claim 1, characterised in that the hydroxyl-terminated polyol d) is present in an amount of 1 to 20 wt.%, with respect to the total amount.

3. Thermoplastic polyurethanes according to Claim 1 or 2, characterised in that, as low molecular weight dihydroxy compound c), butanediol or hexanediol is present in an amount of up to 70 mol.%, with respect to the total amount of chain extender.

4. Process for preparing modified TPUs according to Claims 1 to 3, characterised in that the starting components a) to d), optionally in the presence of catalysts, auxiliary agents and/or additives known per se, are reacted stepwise or in a one-shot process, wherein the ratio of NCO to OH in the basic components is between 0.85 and 1.2.

5. Use of modified TPUs according to Claims 1 to 3 in the medical engineering field.

6. Medical engineering products consisting substantially of a TPU according to one of Claims 1 to 3.

7. Modified TPU according to Claim 1, in which aliphatic diols with 2 to 14 carbon atoms and/or cycloaliphatic diamines are used as chain extenders.

## Revendications

1. Polyuréthanes thermoplastiques segmentés à base de composés dihydroxylés de masse molaire élevée, de diisocyanates et d'agents d'allongement de la chaîne de type diol et/ou d'une diamine, modifiés par un copolymère à blocs de siloxane, caractérisés en ce qu'ils sont constitués par
a) un composé dihydroxylé de masse molaire élevée ayant une masse molaire de 800 à 8 000,
b) au moins un isocyanate de formule générale OCN-Z-NCO, où Z est un radical organique divalent,
c) au moins un agent d'allongement de chaîne difonctionnel,
d) au moins un polyol essentiellement linéaire, à terminaisons hydroxyle, de formule 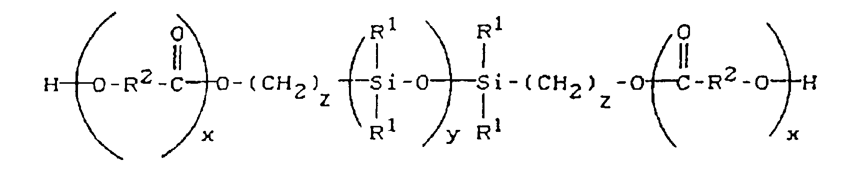 dans laquelle x a une valeur de 1 à 30, y a une valeur de 1 à 50, z a une valeur de 2 à 4, le reste R¹ est un groupe alkyle de 1 à 6 atomes de carbone ou un groupe phényle et R² est un groupe alkylène de 2 à 8 atomes de carbone.

2. Polyuréthanes thermoplastiques selon la revendication 1, caractérisés en ce que le polyol à terminaisons hydroxyle d) est présent en une quantité de 1 à 20 % en masse par rapport à la quantité totale.

3. Polyuréthanes thermoplastiques selon la revendication 1 ou 2, caractérisés en ce que du butanediol ou de l'hexanediol est présent en tant que composé dihydroxylé de faible masse molaire c), en une quantité allant jusqu'à 70 % en mol par rapport à l'ensemble des agents d'allongement de chaîne.

4. Procédé de préparation des TPU modifiés selon les revendications 1 à 3, caractérisé en ce que l'on fait réagir les constituants de départ a) à d), éventuellement en présence de catalyseurs, d'agents auxiliaires et/ou d'additifs connus en soi, par étapes ou selon un procédé en une seule étape, le rapport NCO/OH des constituants de base étant compris entre 0,85 et 1,2.

5. Utilisation des TPU modifiés selon les revendications 1 à 3 dans la technique médicale.

6. Produits de la technique médicale constitués essentiellement d'un TPU selon l'une des revendications 1 à 3.

7. TPU modifiés selon la revendication 1, dans lesquels on utilise comme agent d'allongement de la chaîne un diol aliphatique de 2 à 14 atomes de carbone et/ou une diamine cycloaliphatique.
